# EUROPEAN PATENT SPECIFICATION

(11) **EP 1 292 808 B1**
(45) Date of publication and mention of the grant of the patent: **17.10.2007**
(21) Application number: 01926299.7
(22) Date of filing: 27.04.2001
(51) Int. Cl.: G01D 5/20, G05G 9/047

(54) **SENSOR ARRANGEMENT FOR A MANOEUVRING DEVICE**
SENSORANORDNUNG FÜR EINE MANOEVRIEREINRICHTUNG
SYSTEME DETECTEUR DESTINE A UN DISPOSITIF DE COMMANDE

(30) Priority: 27.04.2000 SE 0001516
(43) Date of publication of application: 19.03.2003
(73) Proprietor: Kongsberg Automotive AB, 565 28 Mullsjö (SE)
(72) Inventor: DANKBAAR, Frank, S-553 15 Jönköping (SE)
(74) Representative: Andersson, Per Rune
(86) International application number: PCT/SE2001/000912
(87) International publication number: WO 2001/081871

(56) References cited:
- WO-A1-99/11951
- US-A- 4 976 227
- US-A- 5 307 013
- US-A- 5 729 007

## Description

### TECHNICAL FIELD:

The present invention relates to a sensor arrangement for a manoeuvring device, and also a manoeuvring device comprising such a sensor arrangement.

### BACKGROUND ART:

For traditional manoeuvring devices, such as gearshift levers in motor vehicles, the gearshift lever is often mechanically connected to the system that the gearshift lever is intended to control, in other words the gearbox. For some more recent systems there are however designs without a mechanical connection between the gearshift lever and the gearbox, in which case sensor arrangements are used to sense the position and the movements of the gearshift lever, in order to thereafter be able to affect the gearbox in a desired manner.

For systems that use sensor arrangements to sense the position of the gearshift lever, it is of great importance that the sensor arrangements that are part of the system are as few, as compact and as cheap as possible. To achieve a higher endurance against malfunctions of the sensor arrangement, it is also desirable with a sensor arrangement that in a cheap and simple manner can be given redundancy, in other words two or more sensors in the sensor arrangement can replace the functions of each other completely or partly, if one of them is malfunctioning.

Systems with sensor arrangements known up to now most often utilize a separate sensor arrangement or sensor element for each direction that the gearshift lever can be moved in. Since a gearshift lever most often can be moved in at least two directions, two separate sensor arrangements or sensor elements are thus needed, and to achieve redundancy at least four are needed which renders such an arrangement relatively expensive and space demanding.

American patent US 4,987,792 shows an example of a solution with a sensor arrangement for every position that the gearshift lever can be moved to. If redundancy is to be obtained with such a solution it will be relatively expensive and also occupy a relatively large area. If one wants to obtain information about the position of the gearshift lever during ongoing gearshift movement, more sensor arrangements must be added, a fact that can be considered to be one more disadvantage for such a solution.

Document EP 620 385 A1 shows a manoeuvring arrangement with a detector arrangement in the bottom of the manoeuvring arrangement. The document does not show how such a device could be used to achieve redundancy, and an additional disadvantage with this manoeuvring arrangement is that it by the location of the detector arrangement requires an increased extent in the direction of the manoeuvring lever, something that counteracts the desire for keeping the design of the arrangement as compact and space saving as possible.

Document US 5,243,871 shows an arrangement where code device and sensor plate are arranged at the side of the manoeuvring lever, and in the wall of the manoeuvring console respectively, which in other words gives a compact solution compared to the arrangement of EP 620 385. This arrangement does not seem to provide a redundancy function between a number of different sensor plates, and an additional disadvantage with this arrangement is that during movements in the "UP-shift" direction of the gearshift lever, the code device will be moved perpendicularly away from the detector arrangement, something that puts high demands for sensitivity on the detector arrangement. The increased distance between the code arrangement and the detector arrangement also makes the arrangement as a whole relatively more sensitive to disturbances.

The international application PCT/SE98/01498 shows a manoeuvring arrangement with a movable code arrangement and detector arrangement which detects positions for the code arrangement. This gives a good function, but has a certain sensitivity for errors in the tolerance at the manufacturing and the mounting of the code plate and the detector arrangement.

### SUMMARY OF INVENTION:

The purpose of the present invention is thus to provide a sensor arrangement for use in a manoeuvring device, which sensor arrangement should be inexpensive, compact, simple to manufacture and install, at the same time as it should admit redundancy between sensors that are used for detecting the positions and the movements of the gearshift lever.

This purpose is achieved with the help of a sensor arrangement for a manoeuvring device which comprises a movably arranged pattern plate with a first pattern which has a first direction of extension, and a sensor plate with a first sensor which is able to detect positions along a main direction for an intersection point between the first pattern and the main direction.

At a first movement of the pattern plate the first pattern moves in a first direction of movement, and the intersection point between the first pattern and the main direction will during the movement of the pattern in this first direction of movement show a movement along the main direction, at the same time as the first direction of movement for the pattern intersects the main direction.

In addition, if during a second movement of the pattern plate, the first pattern is moved in a second direction of movement in such a way that both the first pattern and the intersection point between the pattern and the main direction of the sensor are made to show a movement along the main direction, the sensor used will be able to detect movement of the pattern plate in two different directions, in spite of the fact that the sensor is made solely to detect movement in one direction.

To obtain redundant detection of the movement of the pattern plate in two different directions, only two sensors are thus needed, with the help of a sensor arrangement according to the invention, each one in fact only being able to detect movement in one direction, since these with the help of the invention have been able to detect movement of a pattern of the pattern plate in two directions. The desired redundancy will thus be simple and inexpensive to achieve, and since a minimum of sensors are used, a sensor arrangement according to the invention will also be even more compact than known arrangements with redundant detection.

One of the patterns is suitably continuous, principally straight and oblong, crosses its respective sensor, and is oblique relative to its respective sensor, but alternatively one of the patterns can be connected, arc-shaped, cross its respective sensor, and be oblique relative to its respective sensor.

Suitably, one of the sensors is also principally straight and oblong, but can alternatively be arc-shaped.

In one embodiment, one of the directions of movement for one of the patterns is an arc, and one other of the directions of movement for one of the patterns is a principally straight line.

### BRIEF DESCRIPTION OF THE DRAWINGS:

The invention will below be described in more detail with the help of an example of an embodiment, and also with reference to the enclosed drawings, where
Fig. 1 shows an example of a principle according to the invention, and
Fig. 2-5 shows an example of a pattern plate according to the invention in different positions, and
Fig. 6 shows a schematical cross-section from the side of a manoeuvring arrangement according to the invention, and
Fig. 7 shows an exploded view of a manoeuvring device with pattern plate and sensor plate according to the invention, and
Fig. 8 and 9 shows the principle for the movement of a pattern plate according to the invention.

### EMBODIMENTS:

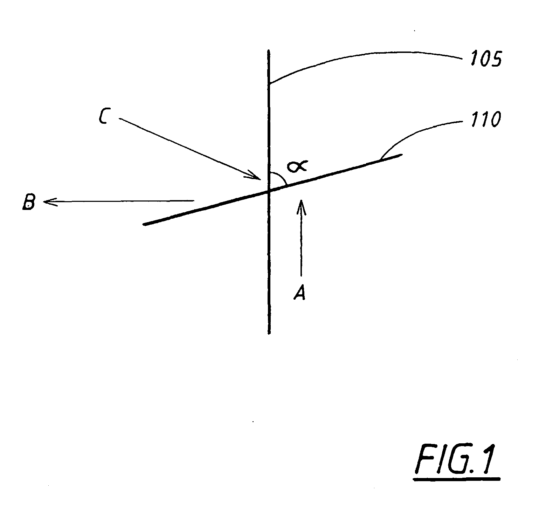

Fig. 1 shows a principle behind the invention: A pattern 110 crosses a sensor 105 in an intersection point C. The sensor 105 is able to detect the position of the intersection point C along a first main direction A, coinciding with the extent of the sensor. The pattern 110 moves in a first trajectory B over the sensor 105, and it is desired that the sensor 105 should be able to detect positions of this movement of the intersection point C.

With a sensor and pattern designed according to known technology, the angle α between the sensor and the pattern would have been perpendicular, which would have led to the sensor not being able to detect positions of the intersection point C during the movement of the pattern in the direction B, since the intersection point C would not have been moving along the direction A then, which is the direction along which the sensor can detect positions of the intersection point C.

According to the invention, however, the pattern 110 is so designed and positioned in relation to the sensor 105 that during the movement of the pattern along the trajectory B, the intersection point C will display a movement along the main direction A, which enables the sensor to detect positions for the intersection point C during the movement of the pattern along the trajectory B.

One way of achieving this effect is to let the pattern have a first direction of extension which does not coincide with the movement trajectory of the pattern, which in other words means that the movement trajectory of the pattern and the first direction of extension of the pattern intersect each other. An example of this is shown in Fig. 1, where an oblong, principally straight pattern 110 is arranged so that it intersects the main direction A of the sensor 105.

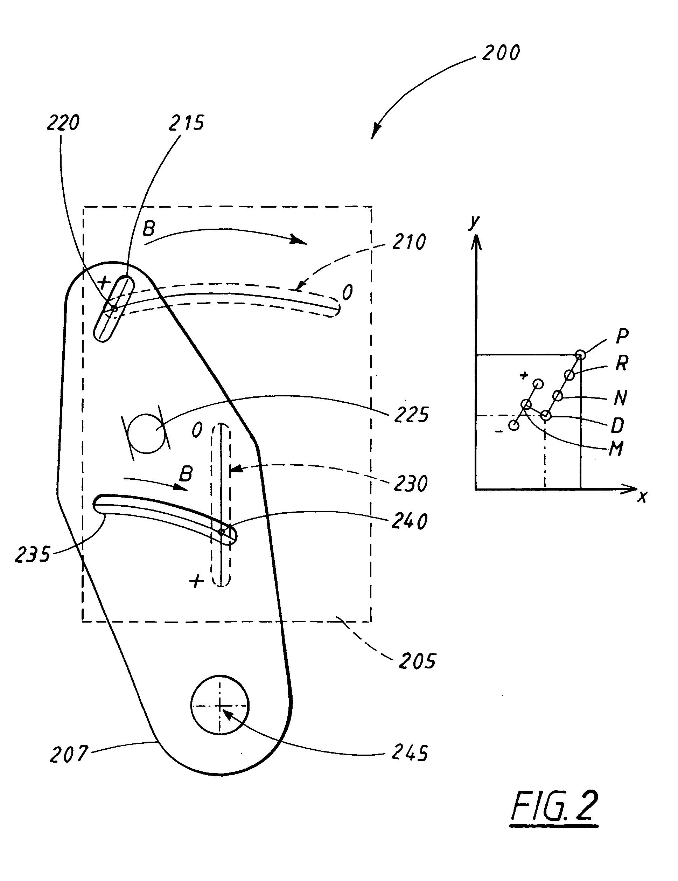

Fig. 2 shows an example of an embodiment 200 of the invention. On a plate 205, a first sensor 210 has been arranged, which is a linear sensor which in the present case is arc-shaped. In a plane separated from the plane of the sensor plate 205, a plate 207 is arranged, which in its turn has a first pattern 215 arranged on it, which in the present case has a straight shape. The pattern plate 207 may, by co-operation with a manoeuvring device in a manner which will be described later, revolve around a turning point 245 in the direction indicated with the arrow B. The pattern plate 207 also exhibits an opening 225 which is used at the co-operation between the manoeuvring plate and the manoeuvring device. The function of the opening 225 will also be described later.

The pattern 215 is arranged so that it intersects the sensor 210 in an intersection point 220. Since the sensor 210 is a linear sensor, it can detect movement of the intersection point 220 along the trajectory that is defined by the extent of the sensor itself, which in the present case coincides with the trajectory that the pattern 215 and the intersection point 220 will exhibit during the movement of the plate 207 around the turning point 245. The detection of the position of the intersection point 220 made by the sensor 210 during its movement over the sensor is used to detect the corresponding position for the manoeuvring device, in the present case a gearshift lever, by means of which the manoeuvring plate is brought into motion. A co-ordinate system has been drawn into Fig. 2, where the sensor reading for movements and positions of the intersection point 220 drawn on the y-axis, in other words the vertical axis.

To attain the desired redundancy, the arrangement 200 has also been equipped with a second sensor 230, arranged on the sensor plate 205, and also a pattern 235 co-operating with the second sensor, arranged on the pattern plate 207. The second pattern 235 intersects the second sensor 230 in a second intersection point 240, the movements of which during the turning movement of the pattern plate 207 in the direction indicated by the arrow B will be detected by the second sensor 230.

As shown in Fig. 2, the second sensor 230 is straight, and the second pattern 235 is arc-shaped. The arc-shape of the second pattern is slightly oblique in relation to the arc in which the pattern plate 207 during turning moves in, and which is indicated with the arrow B. Due to this design of sensor and pattern, the direction of movement of the second pattern 235 during turning of the pattern plate 207 will intersect the extension of the second sensor, its main direction. Irrespective of this, the intersection point 240 between the second sensor 230 and the second pattern 235 will move along the main direction of the sensor, in other words in the direction in which the sensor 230 is able to detect movement.

In the co-ordinate system which has been drawn in Fig. 2, the readings of the second sensor 230 of movements and positions of the intersection point 240 have been drawn on the x-axis, in other words the horizontal axis. Each position of the gearshift lever that controls the movement of the pattern plate will thus correspond to a co-ordinate pair in the co-ordinate system, where every co-ordinate pair is chosen so that its both co-ordinates are unique for positions of the gearshift lever.

The desired redundancy has thus been attained, since every position of the gearshift lever corresponds to two co-ordinates which both are unique for respective position, so that if one of the sensors is malfunctioning, the other sensor will still be able to detect where "its" pattern is.

The specific position that the pattern plate 207 has relative to the sensor plate 205 in Fig. 2 results in a co-ordinate pair corresponding to the so-called P-position of the gearshift lever. Which position corresponds to which co-ordinate pair can of course be selected relatively arbitrary.

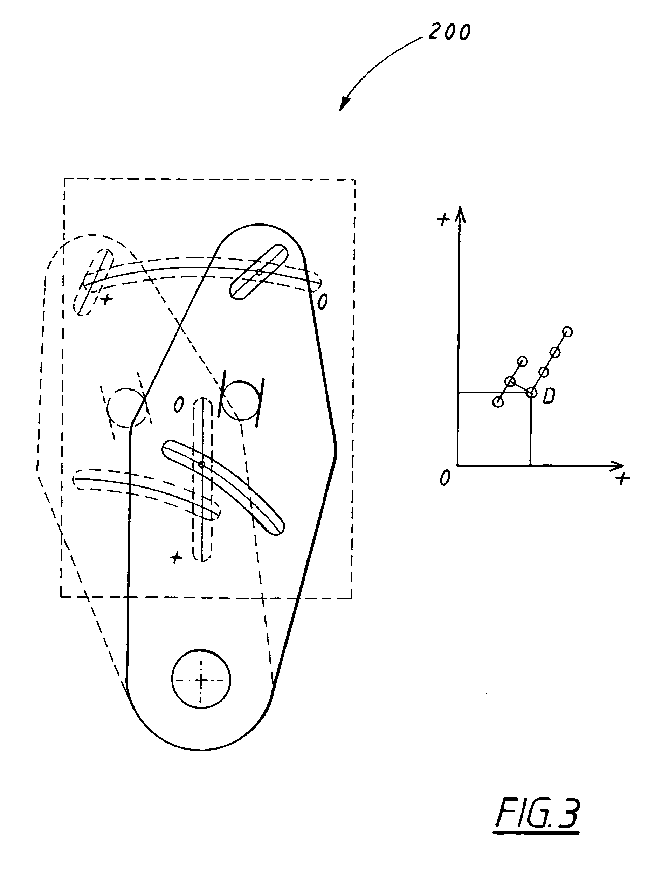

In Fig. 3 the arrangement from Fig. 2 is shown, with the pattern plate turned to a somewhat different position around the turning point. The position of the pattern plate from Fig. 2 is shown with dashed lines. Due to the turn that the pattern plate has made, the first pattern and its intersection point with the first sensor has been moved along the main direction of the first sensor, and resulted in a new position on the y-axis, which is shown in the co-ordinate system. The second pattern has also been moved relative to the second sensor, at which its intersection point with the second sensor has also moved. Due to its design and placement, the second pattern has been parallel displaced relative to the second sensor, at which its intersection point has moved along the sensor, and resulted in a new reading on the x-axis. The new co-ordinate pair that results from the position of the pattern plate in Fig. 3 corresponds to the D-position of the gearshift lever.

The arrangement according to the invention is, as described, to be used for example together with the gearshift lever of a vehicle. Such a gearshift lever is usually movable in two different directions, forwards-backwards, and left-right. The turning movement that is indicated with the arrow B corresponds to one of the directions of movements of the gearshift lever, suitably its movements forwards-backwards. Thus, there is a need for the pattern plate to be brought into movement during the movement of the gearshift lever from left to right as well.

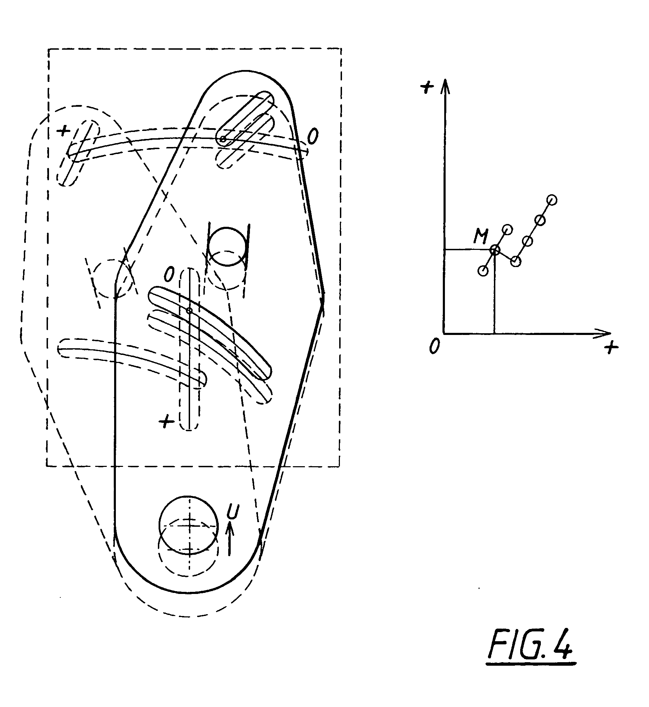

In Fig. 4 a position is shown for the pattern plate relative to the sensor plate which has been achieved by the movement of the pattern plate relative to the position in Fig. 3 in a direction which is perpendicular to the arrow B, in other words "upwards" in the drawing, which is shown with the arrow U. The movement in this direction of the pattern plate is achieved by the movement of the gearshift lever in the direction left-right. The following explanation of the co-operation between the gearshift lever and the pattern plate will describe this in more detail.

The positions of the pattern plate in Fig. 2 and Fig. 3 are shown with dashed lines. During the movement of the pattern plate which has occurred between the positions in Fig. 3 and 4, it is now the second pattern which has moved along "its" sensor main direction, and the first pattern which has moved in a direction which does not coincide with "its" sensor main direction or extension. However, for both patterns, their intersection point with their respective sensor has moved even when the pattern plate has moved with the movement which has occurred between Fig. 3 and Fig. 4, and thus the new position in Fig. 4 results in a new co-ordinate pair which corresponds to a new position of the gearshift lever, in the present case its M-position.

The principle of the invention should now be evident: The pattern plate can execute two movements, a turning movement (Fig. 2-3) and a straight linear movement (Fig. 3-4), and the arrangement is equipped with two sensors, where the design of one of the sensors coincides with one of the movements of the pattern plate, and is in other words arc-shaped, and the design of the second sensor coincides with the second movement of the pattern plate, and is in other words straight or straight linear. The pattern that co-operates with respective sensor has the second design, in other words an arc-shaped sensor - straight pattern, straight sensor - an arc-shaped pattern, where both patterns are somewhat oblique relative to their respective sensor, permitting both sensors to detect at both types of movement.

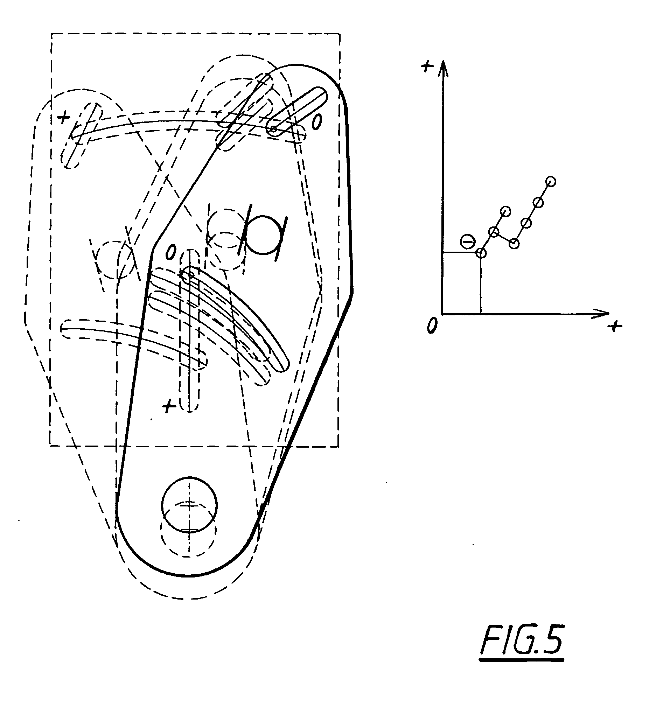

In Fig. 5 the pattern plate is shown in a position where it relative to the position in Fig. 4 has been somewhat turned. The positions of the pattern plate from Fig. 2-4 is shown with dashed lines. Since the movement which has occurred relative the position in Fig. 4 is a turning movement, it is once again the first pattern which has moved along "its" sensor, where the intersection point between the first pattern and the first sensor also has moved, and caused a new position on the y-axis. The second pattern has been parallel displaced respective to the second sensor, and the intersection point between them has been moved along the second sensor, and resulted in a new position on the x-axis, at which the new co-ordinate pair that is acquired corresponds to a new position of the gearshift lever, for example the so-called minus position for a gearshift lever equipped with sequential gearshifting.

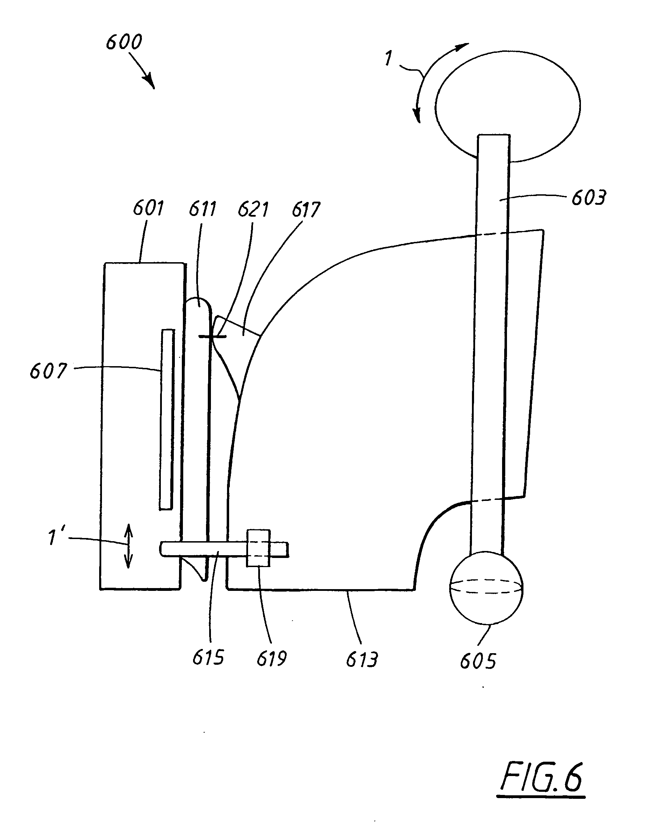

Below, it will be described how the movements of the pattern plate can be controlled by a gearshift lever or some other manoeuvring device. In Fig. 6 a cross-section of a manoeuvring device 600 with a pattern plate 611 and sensor plate 607 according to the invention is shown. The manoeuvring device 600 in Fig. 6 is intended to be used for controlling gear positions of a vehicle, and comprises a manoeuvring console 601, which in this embodiment at least partly encloses the manoeuvring device 600. The whole manoeuvring console is not shown in Fig. 6, part 601 and its wall is only partly shown.

The manoeuvring device 600 further comprises a manoeuvring lever 603, in this embodiment a gearshift lever, which is mounted to turn around a pivoted joint 605 in the shape of a ball, which pivoted joint 605 enables the gearshift lever 603 to be moved relative to the manoeuvring console in the direction which is indicated by the arrow 1, and also in a corresponding arced movement which is principally perpendicular to the arced movement defined by the arrow 1. In the part of the wall of the console which is shown in Fig. 6 there is a sensor plate 607 according to the invention.

As mentioned, the manoeuvring device 600 in the embodiment shown comprises a pattern plate 611 according to the invention, which is intended to move during the movements of the gearshift lever 603 and then to co-operate with the sensor plate 607. The pattern plate 611 is connected to the gearshift lever 603 via a frame 613, a pin 615 and a plate spring 617. In a preferred embodiment, both the sensor plate 607 and the pattern plate 611 are flat and parallel to each other.

To make sure that the pattern plate 611 follows the movements of the gearshift lever 603, the pattern plate 611, as mentioned above, is connected with the frame 613 of the gearshift lever 603 via a pin 615 which engages an opening in the plate 611, and there creates the rotational centre 245 which has been shown in Fig. 2-5 above. The pin 615 extends in a (not shown) slot in the console wall 601 and is biased in a direction against the console wall 601 with the help of a spring element 619.

Further, the plate 611 is connected to the frame 613 with the help of a plate spring 617. This plate spring 617 keeps the plate 611 in the same plane as the sensor plate 607, and engages the opening 225 shown in Fig. 2-4 into the sensor plate 611, but not into the wall of the console 601, which is shown schematically with the connection 621. This connection 621 may be designed in many different ways, for example a plate spring 617 may engage a depression in the plate 611 or, in a preferred embodiment, by a pin which engages an opening in the plate 611 without engaging the console wall 601.

One of the directions of movements which is possible with the gearshift lever 603 is indicated with the arrow 1 in Fig. 6, and corresponds to movement in the direction left-right of the lever. When the gearshift lever 603 moves according to the arrow 1, the pattern plate 611 will move along the console wall 601, over the sensor plate 607, in the direction which is shown with the arrow 1', due to the fact that the pin 615 extends in a (not shown) slot in the direction of the arrow 1' in the console wall 601 and then brings the pattern plate 611 in this direction of movement. It will now be realized that the reason for the pin 615 being spring loaded in the direction against the console wall 601 is to retain the pin 615 in the (not shown) slot during its movement indicated by the arrow 1'. This movement of the pattern plate corresponds to the movement that the pattern plate executes between Fig. 3 and Fig. 4 above.

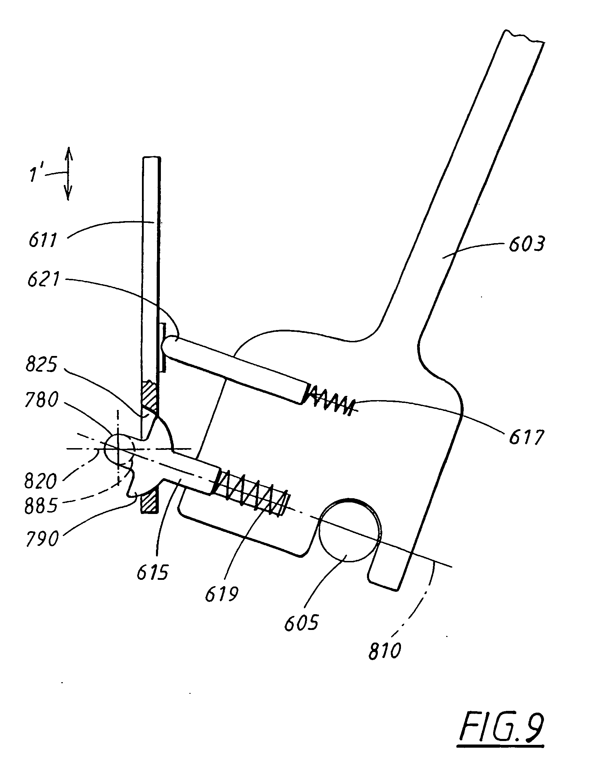

The principally two-dimensional movement of the gearshift lever 603 in the direction of the arrow 1 is thus transformed into a principally one-dimensional movement of the pattern plate 611 in the direction of the arrow 1'. When the gearshift lever 603 is moved in the direction which is principally perpendicular to the direction indicated by the arrow 1 in Fig. 9, the pattern plate 611 will execute the rotational movement which has been described above, in other words the movement which the pattern plate has executed between Fig. 2-3 and Fig. 4-5.

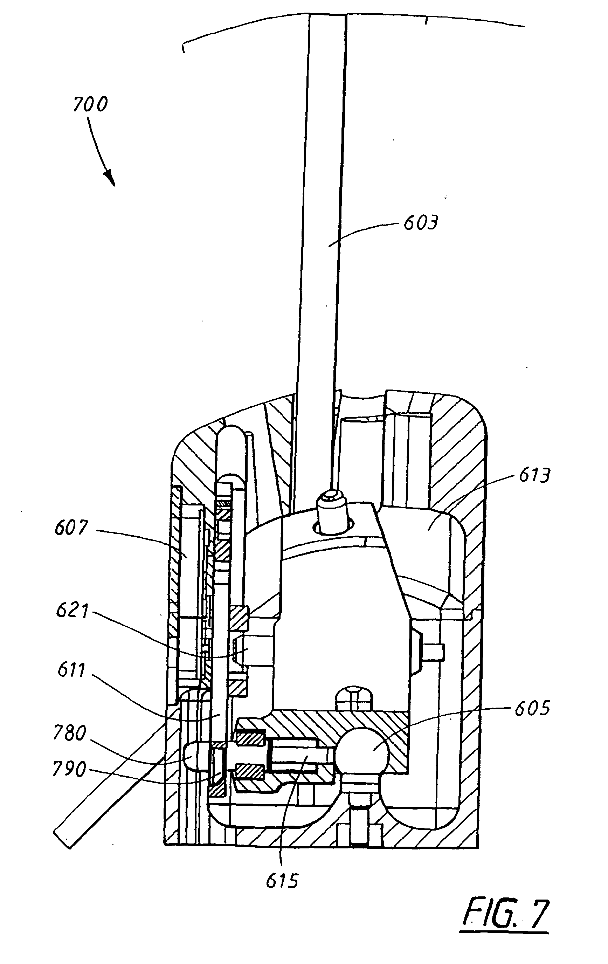

In Fig. 7 a more detailed exploded view of a preferred embodiment of a manoeuvring device 700 according to the invention is shown. For one and the same component, the reference numbers in Fig. 7 corresponds to those in Fig. 6. In Fig. 7 it is also shown how the pin 615 is designed in more detail, and how it co-operates with the pattern plate 611. As indicated in Fig. 7, and described in more detail below, the pin 615 is so designed that the part 790 of the pin which is in mechanical contact with the pattern plate 611 is shaped as a slice of an imaginary sphere. The parts of the patter plate 611 which are brought into mechanical contact with this part of the pin 615 are on their behalf shaped like the inside of a corresponding imaginary sphere.

As earlier mentioned in this description, the pin 615 extends in a (not shown) slot in the console wall. To facilitate the movement of the pin in the slot, at least the part 780 of the pin that extends in the slot is shaped as a thinner part which protrudes from the centre of the part 790 of the pin that is brought into mechanical contact with the pattern plate 611. This is also shown in Fig. 7. In principal however, the whole imaginary sphere could be comprised in the pin 615.

With reference numbers for corresponding components retrieved from Fig. 6 and 7, Fig. 8 shows the principle for the co-operation of the pin 615 with the pattern plate 611 in more detail. As described earlier, the part 790 of the pin 615 which is brought into mechanical contact with the pattern plate 611 is shaped like a slice of an imaginary sphere 835, which is shown with dashed lines. The end-point 780 of the pin 615 is shaped as a part of a smaller sphere 885 which also is shown with dashed lines. Through the centre of this smaller sphere, perpendicular to the plate 611, the pivoting axis 820 for the movements of the pattern plate 611 passes. It is advantageous to design the arrangement with the centre of the smaller sphere constituting an intersection point for the two pivoting axes 810, 820, for all possible positions and movements of the gearshift lever 603.

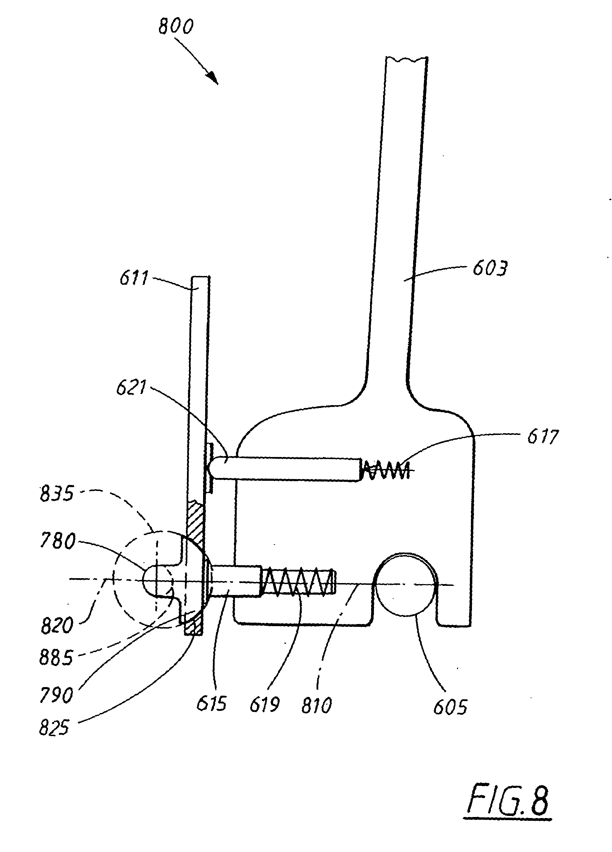

The direction in which the pin 615 has its main extension coincides with the pivoting axis 810 for the lever 603. In a preferred embodiment the pivoting axis 810 for the lever 603 extends, as shown in Fig. 8, through the centre of the pin 615 in the longitudinal direction of the pin.

When the manoeuvring lever 603 is in the position shown in Fig. 8 the pivoting axis 810 for the lever 603 coincides with the pivoting axis 820 for the movements of the plate.

In Fig. 9 the co-operation of the pin 615 with the pattern plate 611 when the gearshift lever 603 is in another position than shown in Fig. 8 is shown. In Fig. 9 the spherical shape of the surface 825 of the pattern plate 611 that is brought into mechanical contact with the pin 915 is evident.

In the position held by the lever 603 in Fig. 9 the pattern plate 611 has moved in the direction indicated with the arrow 1'. Irrespective of this fact, the pivoting axis 820 of the movements of the pattern plate 611 will be perpendicular to the pattern plate, which is a fact for all the movements that are possible for the pattern plate 611.

The other element 621 which co-operates at the movements of the pattern plate is for all movements of the gearshift lever 603 parallel to the pivoting axis 610 of the gearshift lever 603.

By means of the spherical shape of the parts of the pin 615 and the pattern plate 611 that are brought into mechanical contact with each other, the angle of the element 617 relative to the pivoting axis 810 of the manoeuvring lever 603 and also the fact that the pivoting axis 820 of the movements of the pattern plate 611 is perpendicular to the movement plane for the plate, the condition that all movements of the pattern plate 611 take place in one plane is obtained.

The invention is not limited to the examples of embodiments shown above but can be varied freely within the scope of the patent claims below. The sensor principle that is used is preferably magnetic sensors and patterns in a material which these sensors, can perceive, but may be any co-operating code devices and sensors, for example a light emitting or light permeable plate and light sensitive sensors. To let the extension of the sensors coincide with the possible movements of the pattern plate, and to let the pattern of respective sensor be oblique respective to the movement is a design that of course may be replaced with a design where the patterns coincides with the movements and the sensors are oblique.

The code arrangement and detector arrangement have in the description above been shown as plane plates, but it is also conceivable with other designs. Since the movements of the gearshift lever in the example takes place along a curved surface, a dome-shaped detector device which detects movements along a dome-shaped plane of a code arrangement may be conceivable.

## Claims

1. Sensor arrangement (100,200) for a manoeuvring device, comprising a movably arranged pattern plate (207) with a first pattern (215,235) which has a first direction of extension, and a sensor plate (205) with a first sensor (210,230) which is able to detect positions along a main direction (A) for an intersection point (C,220,240) between the first pattern and the main direction, where the first pattern at a first movement of the pattern plate moves in a first direction of movement (B), **characterized in that** the intersection point (C,220,240) during movement of the pattern (215,235) in this first direction of movement will exhibit a movement along the main direction (A) at the same time as the first direction of movement (B) of the pattern intersects the main direction.

2. Sensor arrangement according to claim 1, in which the first pattern (215,235) at a second movement of the pattern plate (207) moves in a second direction of movement, at which both the intersection point (C,220,240) and the first pattern will display a movement along the main direction (A).

3. Sensor arrangement according to claim 1 or 2, in which the first pattern (215,235) is so arranged and positioned in relation to the first sensor (210,230) that
- the first pattern at a movement in either of its directions is able to produce a continuous detection in the first sensor, and that
- at least a number of positions in the movement along either of the directions of the first pattern produces an unambiguous detection at the first sensor.

4. Sensor arrangement according to any of the preceding claims, further comprising a second pattern (215,235) and a second sensor (210,230), which second pattern and second sensor co-operate with each other in the same way as the first pattern and the first sensor, whereby redundancy of the capability of the sensor arrangement to detect movement and positions of the pattern plate (207) in both the first and the second direction is obtained.

5. Sensor arrangement according to any of the preceding claims, in which both directions of movements of the first pattern are located in a plane which is defined by the sensor plate.

6. Sensor arrangement according to claim 4, in which one of the patterns is continuous, essentially straight, oblong, crosses its respective sensor, and is oblique relative to its respective sensor.

7. Sensor arrangement according to claim 4, in which one of the patterns is continuous, arc-shape, crosses its respective sensor, and is oblique relative to its respective sensor.

8. Sensor arrangement according to claim 4, in which one of the sensors is essentially straight and oblong.

9. Sensor arrangement according to claim 4, in which one of the sensors is arc-shaped.

10. Sensor arrangement according to claim 4, in which one of the directions of movement for one of the patterns is an arc.

11. Sensor arrangement according to claim 4, in which one of the directions of movement for one of the patterns is an essentially straight line.

12. Sensor arrangement according to claim 4, in which one of the patterns is shaped in a magnetic material, and one of the sensors is a linear magnetic sensor.

13. Sensor arrangement according to any of the preceding claims, in which the first pattern moves due to the movement of a manoeuvring lever with which the pattern plate is connected.

## Patentansprüche

1. Sensoranordnung (100, 200) für eine Manövriereinrichtung, mit einer bewegbar angeordneten Musterplatte (207) mit einem ersten Muster (215, 235), das eine erste Erstreckungsrichtung aufweist, und mit einer Sensorplatte (205) mit einem ersten Sensor (210, 230), der Stellungen entlang einer Hauptrichtung (A) für einen Schnittpunkt (C, 220, 240) zwischen dem ersten Muster und der Hauptrichtung erfassen kann, wenn sich das erste Muster bei einer ersten Bewegung der Musterplatte in einer ersten Bewegungsrichtung (B) bewegt, **dadurch gekennzeichnet, dass** der Schnittpunkt (C, 220, 240) während der Bewegung des Musters (215, 235) in dieser ersten Bewegungsrichtung eine Bewegung entlang der Hauptrichtung (A) zu derselben Zeit zeigt, zu der die erste Bewegungsrichtung (B) des Musters die Hauptrichtung kreuzt.

2. Sensoranordnung nach Anspruch 1, bei der sich das erste Muster (215, 235) bei einer zweiten Bewegung der Musterplatte (207) in einer zweiten Bewegungsrichtung bewegt, bei der sowohl der Schnittpunkt (C, 220, 240) als auch das erste Muster eine Bewegung entlang der Hauptrichtung (A) zeigen.

3. Sensoranordnung nach Anspruch 1 oder 2, bei der das erste Muster (215, 235) so ausgebildet und mit Bezug auf den ersten Sensor (210, 230) so angeordnet ist, dass
- das erste Muster bei einer Bewegung in jede seiner beiden Richtungen eine kontinuierliche Erfassung in dem ersten Sensor hervorrufen kann und dass
- mindestens eine Reihe von Stellungen in der Bewegung entlang der beiden Richtungen des ersten Musters eine unzweideutige Erfassung an dem ersten Sensor hervorruft.

4. Sensoranordnung nach einem der vorhergehenden Ansprüche, des Weiteren mit einem zweiten Muster (215, 235) und einem zweiten Sensor (210, 230), wobei das zweite Muster und der zweite Sensor miteinander in derselben Weise wie das erste Muster und der erste Sensor zusammenarbeiten, wodurch eine Redundanzfähigkeit der Sensoranordnung zum Feststellen der Bewegung und Stellungen der ersten Platte (207) in sowohl der ersten als auch der zweiten Richtung erreicht wird.

5. Sensoranordnung nach einem der vorhergehenden Ansprüche, bei der beide Bewegungsrichtungen des ersten Musters in einer Ebene liegen, die durch die Sensorplatte definiert ist.

6. Sensoranordnung nach Anspruch 4, bei der eines der Muster kontinuierlich, im Wesentlichen geradlinig, länglich ist, seinen zugehörigen Sensor kreuzt und schräg zu seinem zugehörigen Sensor ist.

7. Sensoranordnung nach Anspruch 4, bei der eines der Muster kontinuierlich, bogenförmig ist, seinen zugehörigen Sensor kreuzt und schräg zu seinem zugehörigen Sensor ist.

8. Sensoranordnung nach Anspruch 4, bei der einer der Sensoren im Wesentlichen geradlinig und länglich ist.

9. Sensoranordnung nach Anspruch 4, bei der einer der Sensoren bogenförmig ist.

10. Sensoranordnung nach Anspruch 4, bei der eine der Bewegungsrichtungen für eines der Muster ein Bogen ist.

11. Sensoranordnung nach Anspruch 4, bei der eine der Bewegungsrichtungen für eines der Muster eine im Wesentlichen geradlinige Linie ist.

12. Sensoranordnung nach Anspruch 4, bei der eines der Muster in einem magnetischen Material gestaltet ist und einer der Sensoren ein linearer magnetischer Sensor ist.

13. Sensoranordnung nach einem der vorhergehenden Ansprüche, bei der sich das erste Muster infolge der Bewegung eines Manövrierhebels, mit dem die Musterplatte verbunden ist, bewegt.

## Revendications

1. Agencement de capteurs (100, 200) pour un dispositif de manoeuvre, comportant une plaque de gabarits agencée de manière mobile (207) ayant un premier gabarit (215, 235) qui a une première direction d'extension, et une plaque de capteurs (205) ayant un premier capteur (210, 230) qui peut détecter des positions le long d'une direction principale (A) pour un point d'intersection (C, 220, 240) entre le premier gabarit et la direction principale, où le premier gabarit lors d'un premier déplacement de la plaque de gabarits se déplace dans une première direction de déplacement (B), **caractérisé en ce que** le point d'intersection (C, 220, 240) pendant le déplacement du gabarit (215, 235) dans la première direction de déplacement présentera un déplacement le long de la direction principale (A) en même temps que la première direction de déplacement (B) du gabarit rencontre la direction principale.

2. Agencement de capteurs selon la revendication 1, dans lequel le premier gabarit (215, 235) pendant un second déplacement de la plaque de gabarits (207) se déplace dans une seconde direction de déplacement, pendant lequel à la fois le point d'intersection (C, 220, 240) et le premier gabarit présenteront un déplacement le long de la direction principale (A).

3. Agencement de capteurs selon la revendication 1 ou 2, dans lequel le premier gabarit (215, 235) est agencé et positionné par rapport au premier capteur (210, 230) de sorte que
- le premier gabarit pendant un déplacement dans l'une de ses deux directions peut produire une détection continue dans le premier capteur, et que
- au moins plusieurs positions pendant le déplacement le long de l'une des deux directions du premier gabarit produit une détection non ambiguë sur le premier capteur.

4. Agencement de capteurs selon l'une quelconque des revendications précédentes, comportant également un second gabarit (215, 235) et un second capteur (210, 230), lesquels second gabarit et second capteur coopèrent l'un avec l'autre de la même manière que le premier gabarit et le premier capteur, de sorte qu'une redondance de la capacité de l'agencement de capteurs à détecter un déplacement et des positions de la plaque de gabarits (207) à la fois dans les première et seconde directions est obtenue.

5. Agencement de capteurs selon l'une quelconque des revendications précédentes, dans lequel les deux directions de déplacement du premier gabarit sont situées dans un plan qui est défini par la plaque de capteurs.

6. Agencement de capteurs selon la revendication 4, dans lequel l'un des gabarits est continu, sensiblement droit, oblong, traverse son capteur respectif et est oblique par rapport à son capteur respectif.

7. Agencement de capteurs selon la revendication 4, dans lequel l'un des gabarits est continu, a une forme d'arc, traverse son capteur respectif et est oblique par rapport à son capteur respectif.

8. Agencement de capteurs sur la revendication 4, dans lequel l'un des capteurs est sensiblement droit et oblong.

9. Agencement de capteurs selon la revendication 4, dans lequel l'un des capteurs a une forme d'arc.

10. Agencement de capteurs selon la revendication 4, dans lequel l'une des directions de déplacement pour l'un des gabarits est un arc.

11. Agencement de capteurs selon la revendication 4, dans lequel l'une des directions de déplacement de l'un des gabarits est une ligne sensiblement droite.

12. Agencement de capteurs selon la revendication 4, dans lequel l'un des gabarits est formé dans un matériau magnétique, et l'un des capteurs est un capteur magnétique linéaire.

13. Agencement de capteurs selon l'une quelconque des revendications précédentes, dans lequel le premier gabarit se déplace en raison du mouvement d'un levier de manoeuvre auquel la plaque de gabarits est reliée.
